# EUROPÄISCHE PATENTANMELDUNG

(11) **EP 2 915 841 A1**
(43) Veröffentlichungstag der Anmeldung: **09.09.2015**
(21) Anmeldenummer: 14157681.9
(22) Anmeldetag: 04.03.2014
(51) Int. Cl.: C08K 3/00, C08G 63/00, C08L 67/00, H01B 3/02

(54) **Polyester Zusammensetzung**

(71) Anmelder: LANXESS Deutschland GmbH, 50569 Köln (DE)
(72) Erfinder: Timo Immel, Dr., 41539 Dormagen (DE); Matthias Bienmüller, Dr., 47803 Krefeld (DE)

(57) **Zusammenfassung**

Die vorliegende Erfindung betrifft Mischungen für thermoplastische Formmassen auf Basis von Polyestern mit dem mineralischen Füllstoff Titandioxid, deren Herstellung sowie daraus herzustellende elektrisch isolierende, thermisch leitfähige Erzeugnisse, bevorzugt von Elektro- und Elektronikeinhausungen und Kühlkörpern, insbesondere bevorzugt von Kühlkörpern und wärmeableitenden Komponenten von LEDs.

## Beschreibung

Die vorliegende Erfindung betrifft Mischungen für thermoplastische Formmassen auf Basis von Polyestern mit dem mineralischen Füllstoff Titandioxid, deren Herstellung sowie daraus herzustellende elektrisch isolierende, thermisch leitfähige Erzeugnisse, bevorzugt von Elektro- und Elektronikeinhausungen und Kühlkörpern, insbesondere bevorzugt von Kühlkörpern und wärmeableitenden Komponenten von LEDs.

Thermoplastische Polymere werden wegen ihrer guten elektrisch isolierenden Eigenschaften für zahlreiche Anwendungen in der Elektroindustrie eingesetzt. Sie wirken aufgrund ihrer geringen Wärmeleitfähigkeit aber auch thermisch isolierend, was beim Einsatz für elektrische Bauteile dann ein Problem darstellt, wenn relativ viel Wärme entsteht, die abgeführt werden muss. Die elektrische und thermische Leitfähigkeit von Thermoplasten lässt sich durch Additive über einen weiten Bereich modifizieren. So wird durch Zusatz von z. B. Graphit sowohl die elektrische, als auch die thermische Leitfähigkeit erhöht.

In JP 2007 016093 A wird eine Zusammensetzung aus thermoplastischen Polymeren und 1-50 Gew.-% Graphit mit verbesserter thermischer Leitfähigkeit von 1,6 W/mK beschrieben. Durch die Verwendung von Graphit wird die Eigenschaft des Kunststoffes als elektrischer Isolator jedoch deutlich beeinträchtigt.

Für die Erhöhung der thermischen Leitfähigkeit unter Beibehaltung einer sehr geringen elektrischen Leitfähigkeit, wie sie für Anwendungen in der Elektroindustrie erforderlich ist, gibt es hingegen nur wenige Lösungen.

In der Dissertationsschrift von Wolfgang Übler (Universität Erlangen-Nürnberg, Publikation 17.Juli 2004) zum Thema "Erhöhung der thermischen Leitfähigkeit elektrisch isolierender Polymerwerkstoffe" wird ein Verfahren beschrieben, Gießharze mit thermisch gut leitfähigen, elektrisch isolierenden pulverigen Füllkomponenten so hoch zu füllen, dass die Wärmeleitfähigkeit des resultierenden Gießharzes maximiert wird. Dieses Ziel wurde mit kommerziellen keramischen Pulverfraktionen wie Aluminiumoxid, Siliziumkarbid, Bornitrid, Quarzgut, Quarzmehl, die üblicherweise zur Schleifkörperherstellung verwendet werden, erreicht. Die Erhöhung der Wärmeleitfähigkeit thermoplastischer Formmassen und daraus herzustellender Erzeugnisse durch Zusatz von Aluminiumoxid (α-Al₂O₃) ist bekannt und in einer Reihe von Anmeldungen beschrieben.

In DE 102 60 098 A1 und WO 08/043682 A1 wird gezeigt, dass thermoplastische Polyester durch Zusatz von Aluminiumoxid elektrisch isolierend und wärmeleitfähig sind. Als weitere Zusatzstoffe werden niedermolekulare und polymere organische Verbindungen aufgeführt.

In EP 2 078 736 A1 wird die Verwendung thermoplastischer Formmassen, bevorzugt auf Basis von Polyestern, mit Bornitrid als wärmeleitfähigem Additiv beschrieben. Allerdings ist die Wärmeleitfähigkeit von Bornitrid aufgrund der Anisotrophie von Bornitrid richtungsabhängig. Hohe Wärmeleitfähigkeiten werden typischer Weise nur in Spritzrichtung erreicht. Des Weiteren erschwert die Anisotropie des Bornitrids die Simulation der Wärmeleitfähigkeit im Bauteil enorm, da die Ausrichtung der Füllstoffteilchen in der abgekühlten Formmasse mit simuliert werden muss.

In der Europäischen Anmeldung mit der Anmeldenummer EP 13195325.9 wird die Verwendung von Aluminiumsilikat als Zusatz zur Verbesserung der Wärmeleitfähigkeit in thermoplastischen Formmassen basierend auf Polyestern beschrieben. Hier können gute Wärmeleitfähigkeiten bei gleichzeitig guten mechanischen Eigenschaften erhalten werden. Nachteilig an der Verwendung von Aluminiumsilikat ist die braune Eigenfarbe der kommerziell verfügbaren Typen sowie eine typischerweise sehr inhomogene Oberfläche. Damit sind derartige Typen für Sichtanwendungen und insbesondere für Anwendungen mit hohen Anforderungen an die Reflexion nicht geeignet.

Aufgabe der vorliegenden Erfindung war deshalb die Bereitstellung thermoplastischer Formmassen auf Basis von Polyestern und deren Verwendung in der Herstellung elektrisch isolierender, thermisch leitfähiger Erzeugnisse, bevorzugt von Elektro- und Elektronikeinhausungen und Kühlkörpern, insbesondere bevorzugt von Kühlkörpern und wärmeableitenden Komponenten von LEDs. Diese sollen eine hohe isotrope Wärmeleitfähigkeit und insbesondere eine hohe Wärmeleitfähigkeit auch orthogonal zur Spritzrichtung bei gleichzeitig guten mechanischen Eigenschaften sowie gute Oberflächen und eine hohe Reflexion aufweisen.

Praktisch gesehen ist die Wärmeleitfähigkeit die Wärmemenge (in Ws), die in 1 s durch eine 1 m dicke Stoffschicht der Fläche 1 m² fließt, wenn der Temperaturunterschied 1 K ist. Die ungekürzte Einheit ist also Wattsekunde mal Meter pro Quadratmeter, Kelvin und Sekunde.

Im allgemeinen, anisotropen Fall ist die Wärmeleitfähigkeit ein Tensor zweiter Stufe. So leitet Holz in Faserrichtung die Wärme besser als quer dazu. Verläuft der Temperaturgradient schräg zu den Materialachsen, so weicht die Richtung des Wärmestromes von der des Gradienten ab.

Eine hohe Wärmeleitfähigkeit im Sinne der vorliegenden Erfindung liegt für Polyester basierte Formmassen bzw. daraus hergestellte Erzeugnisse bei einem Wert ≥8 W/mK.

Zur Klarstellung sei angemerkt, dass vom Rahmen der vorliegenden Erfindung alle in der vorliegenden Beschreibung aufgeführten allgemeinen oder in Vorzugsbereichen genannten Definitionen und Parameter in beliebigen Kombinationen umfasst sind.

Überraschenderweise wurde gefunden, dass Erzeugnisse aus Polyester mit hohen Anteilen Titandioxid hohe Wärmeleitfähigkeitseigenschaften, auch orthogonal zur Spritzrichtung, sowie gute mechanische Eigenschaften zeigen und sich damit hervorragend zur Herstellung elektrisch isolierender, thermisch leitfähiger Erzeugnisse, bevorzugt in Form von Elektro- und Elektronikeinhausungen und Kühlkörpern, insbesondere bevorzugt von Kühlkörpern und wärmeableitenden Komponenten von LEDs, eignen.

Gute mechanische Eigenschaften im Sinne der vorliegenden Erfindung zeichnen sich im Falle Polyester basierter Erzeugnisse durch hohe Werte bei der Izod Schlagzähigkeit und gleichzeitig hohen Werten oder zumindest Beibehaltung der Eigenschaften in Bezug auf Randfaserdehnung oder Biegefestigkeit gegenüber dem Stand der Technik aus.

Die Schlagzähigkeit beschreibt die Fähigkeit eines Werkstoffes Stoßenergie und Schlagenergie zu absorbieren ohne zu brechen. Die Prüfung der Izod Schlagzähigkeit nach ISO 180 ist eine Standard-Methode zur Bestimmung der Schlagzähigkeit von Materialien. Hierbei wird ein Arm zunächst in einer bestimmten Höhe gehalten (= konstante potentielle Energie) und schließlich freigegeben. Der Arm trifft auf die Probe wobei diese bricht. Von der Energie, die durch die Probe absorbiert wird, wird die Aufprallenergie bestimmt. Die Schlagzähigkeit wird berechnet als das Verhältnis aus Schlagarbeit und Probekörperquerschnitt (Maßeinheit kJ/m²).

Die Biegefestigkeit in der technischen Mechanik ist ein Wert für eine Biegespannung in einem auf Biegung beanspruchten Bauteil, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzzeit-Biegeversuch nach ISO 178 werden balkenförmige Probekörper vorzugsweise mit den Abmessungen 80 mm · 10 mm · 4 mm an den Enden auf zwei Aufleger gelegt und in der Mitte mit einem Biegestempel belastet. Aus den ermittelten Kräften und Durchbiegungen werden die Kennwerte für die Biegespannung und die Randfaserdehnung errechnet. (Bodo Carlowitz: Tabellarische Übersicht über die Prüfung von Kunststoffen, 6. Auflage, Giesel-Verlag für Publizität, 1992, S. 16-17).

Die vorliegende Erfindung betrifft deshalb Zusammensetzungen enthaltend
a) 20 bis 50 Gew.-%, bevorzugt 20 bis 40 Gew.-%, besonders bevorzugt 25 bis 35 Gew.-% wenigstens eines Polyesters, bevorzugt wenigstens eines Polyalkylenterephthalats, besonders bevorzugt wenigstens eines Polyesters aus der Gruppe PET (Polyethylenterephthalat), PBT (Polybutylenterephthalat) und PCT (Poly(1,4-cyclohexandimethanolterephthalat) oder deren Blends, wobei im Falle von Blends aus PET und PBT der PET Anteil bezogen auf die Summe aller enthaltenen Polyester bevorzugt im Bereich von 50 bis 99,9 Gew-% liegt, und
b) 50 bis 80 Gew.-%, bevorzugt 60 bis 80 Gew.-%, besonders bevorzugt 65 bis 75 Gew.-% Titandioxid,
wobei die Summe aller Gewichtsprozente stets 100 ergibt.

Die Zubereitung der erfindungsgemäßen Zusammensetzungen für eine weitere Nutzung erfolgt durch Mischen der als Edukte einzusetzenden Komponenten a) und b) in wenigstens einem Mischwerkzeug. Hierdurch werden als Zwischenprodukte, auf den erfindungsgemäßen Zusammensetzungen basierende, Formmassen erhalten. Die Zusammensetzungen bzw. die daraus herzustellenden Formmassen und Erzeugnisse können entweder ausschließlich aus den Komponenten a) und b) bestehen, oder aber zusätzlich zu den Komponenten a) und b) noch weitere Komponenten enthalten. In diesem Fall sind die Komponenten a) und b) im Rahmen der angegebenen Mengenbereiche so zu variieren, dass die Summe aller Gewichtsprozente stets 100 ergibt.

Bevorzugt enthalten die erfindungsgemäßen Zusammensetzungen zusätzlich zu a) und b) noch
c) 0.01 bis 15 Gew.-%, bevorzugt 0,01 bis 10 Gew.-%, besonders bevorzugt 0,01 bis 5 Gew.-% Mg₃Si₄O₁₀(OH)₂, bevorzugt mikrokristallines Mg₃Si₄O₁₀(OH)₂, wobei die Summe aller Gewichtsprozente stets 100 ergibt.

Bevorzugt enthalten die erfindungsgemäßen Zusammensetzungen zusätzlich zu den Komponenten a), b) und c) noch
d) 0,01 bis 5 Gew.-%, bevorzugt 0,05 bis 4 Gew.-%, besonders bevorzugt 0,1 bis 3 Gew.-% wenigstens eines Phosphitstabilisators, wobei die Komponenten a), b), c) soweit reduziert werden, dass die Summe aller Gewichtsprozente stets 100 ergibt.

In einer bevorzugten Ausführungsform enthalten die erfindungsgemäßen Zusammensetzungen zusätzlich zu den Komponenten a) bis d) oder anstelle von d) noch
e) 0,01 bis 15 Gew.-%, bevorzugt 0,01 bis 10 Gew.-%, besonders bevorzugt 0,01 bis 5 Gew.-% wenigstens eines Entformungsmittels, wobei die übrigen Komponenten soweit reduziert werden, dass die Summe aller Gewichtsprozente stets 100 ergibt.

In einer bevorzugten Ausführungsform enthalten die erfindungsgemäßen Zusammensetzungen zusätzlich zu den Komponenten a) bis e) oder anstelle von d) und/oder e) noch
f) 0,01 bis 10 Gew.% wenigstens eines Additivs zur Verbesserung der Fließfähigkeit, auch als Fließhilfsmittel, Fließmittel, Fließhilfe oder inneres Gleitmittel bezeichnet, wobei die übrigen Komponenten soweit reduziert werden, dass die Summe aller Gewichtsprozente stets 100 ergibt.

In einer bevorzugten Ausführungsform enthalten die erfindungsgemäßen Zusammensetzungen zusätzlich zu den Komponenten a) bis e) oder anstelle der Komponenten d) und/oder e) und/oder f) noch
g) 0,01 bis 35 Gew.-%, bevorzugt 0,01 bis 30 Gew.-%, besonders bevorzugt 0,01 bis 15 Gew.-% wenigstens eines sonstigen, zu den Komponenten b), c), d) und e) oder anstelle der Komponenten d) und/oder e) und/oder f) unterschiedlichen Additivs, wobei die übrigen Komponenten soweit reduziert werden, dass die Summe aller Gewichtsprozente stets 100 ergibt.

Die Erfindung betrifft ferner die Verwendung der erfindungsgemäßen Zusammensetzungen zur Herstellung wärmeleitfähiger Erzeugnisse. Bevorzugt betrifft die Erfindung die Verwendung der erfindungsgemäßen Zusammensetzungen, bevorzugt entweder als Granulat oder als Formmasse, in einer Extrusion, Profil-Extrusion oder im Spritzguss.

Die vorliegende Erfindung betrifft zudem die Verwendung von 50 bis 80 Gew.-% Titandioxid in Zusammensetzungen die 20 bis 50 Gew.-% wenigstens eines Polyesters, bevorzugt wenigstens eines Polyalkylenterephthalats, besonders bevorzugt wenigstens eines Polyesters aus der Gruppe PET (Polyethylenterephthalat), PBT (Polybutylenterephthalat) und PCT (Poly(1,4-cyclohexandimethanolterephthalat) oder deren Blends enthalten, wobei die Summe aller Gewichtsprozente stets 100 ergibt, zur Erhöhung der Wärmeleitfähigkeit von daraus herzustellenden Erzeugnissen, bevorzugt zur Erhöhung der Wärmeleitfähigkeit von daraus herzustellenden Erzeugnissen orthogonal der bei der Herstellung dieser Erzeugnisse, insbesondere beim Spritzguss, angewandten Spritzrichtung.

Die vorliegende Erfindung betrifft bevorzugt die Verwendung von 50 bis 80 Gew.-% Titandioxid in Zusammensetzungen die 20 bis 50 Gew.-% wenigstens eines Polyesters, bevorzugt wenigstens eines Polyalkylenterephthalats, besonders bevorzugt wenigstens eines Polyesters aus der Gruppe PET (Polyethylenterephthalat), PBT (Polybutylenterephthalat) und PCT (Poly(1,4-cyclohexandimethanolterephthalat) oder deren Blends in Kombination mit Mg₃Si₄O₁₀(OH)₂ enthalten, wobei die Summe aller Gewichtsprozente stets 100 ergibt, zur Erhöhung der Wärmeleitfähigkeit von daraus herzustellenden Erzeugnissen, bevorzugt zur Erhöhung der Wärmeleitfähigkeit von daraus herzustellenden Erzeugnissen orthogonal der bei der Herstellung dieser Erzeugnisse, insbesondere beim Spritzguss, angewandten Spritzrichtung.

Die vorliegende Erfindung betrifft bevorzugt die Verwendung von 50 bis 80 Gew.-% Titandioxid in Zusammensetzungen die 20 bis 50 Gew.-% wenigstens eines Polyesters, bevorzugt wenigstens eines Polyalkylenterephthalats, besonders bevorzugt wenigstens eines Polyesters aus der Gruppe PET (Polyethylenterephthalat), PBT (Polybutylenterephthalat) und PCT (Poly(1,4-cyclohexandimethanolterephthalat) oder deren Blends in Kombination mit Mg₃Si₄O₁₀(OH)₂ und wenigstens einem Phosphitstabilisator enthalten, wobei die Summe aller Gewichtsprozente stets 100 ergibt, zur Erhöhung der Wärmeleitfähigkeit von daraus herzustellenden Erzeugnissen, bevorzugt zur Erhöhung der Wärmeleitfähigkeit von daraus herzustellenden Erzeugnissen orthogonal der bei der Herstellung dieser Erzeugnisse, insbesondere beim Spritzguss, angewandten Spritzrichtung.

Die vorliegende Erfindung betrifft bevorzugt die Verwendung von 50 bis 80 Gew.-% Titandioxid in Zusammensetzungen die 20 bis 50 Gew.-% wenigstens eines Polyesters, bevorzugt wenigstens eines Polyalkylenterephthalats, besonders bevorzugt wenigstens eines Polyesters aus der Gruppe PET (Polyethylenterephthalat), PBT (Polybutylenterephthalat) und PCT (Poly(1,4-cyclohexandimethanolterephthalat) oder deren Blends in Kombination mit Mg₃Si₄O₁₀(OH)₂ wenigstens einem Phosphitstabilisator und wenigstens einem Entformungsmittel enthalten, wobei die Summe aller Gewichtsprozente stets 100 ergibt, zur Erhöhung der Wärmeleitfähigkeit von daraus herzustellenden Erzeugnissen, bevorzugt zur Erhöhung der Wärmeleitfähigkeit von daraus herzustellenden Erzeugnissen orthogonal der bei der Herstellung dieser Erzeugnisse, insbesondere beim Spritzguss, angewandten Spritzrichtung.

Besonders bevorzugt wird Titandioxid in wenigstens einem Polyalkylenterephthalat sowie in Kombination mit Mg₃Si₄O₁₀(OH)₂ und Tetrakis(2,4-di-tert-butylphenyl)-1,1-biphenyl-4,4'-diylbisphosphonit, jeweils in den oben angegebenen Mengen, eingesetzt.

Ganz besonders bevorzugt wird Titandioxid in wenigstens einem Polyalkylenterephthalat sowie in Kombination mit Mg₃Si₄O₁₀(OH)₂ und Tetrakis(2,4-di-tert-butylphenyl)-1,1-biphenyl-4,4'-diylbisphosphonit und wenigstens einem Entformungsmittel, bevorzugt wenigstens einem Montanester mehrwertiger Alkohole, besonders bevorzugt wenigstens einem Ester geradgettiger, unverzweigter C₂₈ -C₃₂ Monocarbonsäuren mit Ethylenglykol oder Glycerin, jeweils in den angegebenen Mengen, eingesetzt.

### Komponente a)

Erfindungsgemäß wird in den Formmassen oder Zusammensetzungen wenigstens ein Polyester eingesetzt, bevorzugt wenigstens ein Polyalkylenterephthalat. Besonders bevorzugt wird wenigstens ein Polyester der Gruppe Polybutylenterephthalat (PBT), Polyethylenterephthalat (PET), Poly(1,4-cyclohexandimethanolterephthalat (PCT), oder ein Blend auf Basis von PBT und PET, oder ein Blend auf Basis von PBT und PCT, oder ein Blend auf Basis von PET und PCT oder ein Blend auf Basis von PBT, PET und PCT eingesetzt. Bevorzugt liegt der Anteil des PET im Falle eines Blends von PET und PBT der Anteil an PET im Bereich von 50 bis 99,9 Gew-% bezogen auf die Summe aller enthaltenen Polyester.
Die erfindungsgemäß einzusetzenden Polyester sind Reaktionsprodukte aus aromatischen Dicarbonsäuren oder ihrer reaktionsfähigen Derivate, bevorzugt Dimethylestern oder Anhydriden, und aliphatischen, cycloaliphatischen oder araliphatischen Diolen und Mischungen dieser Edukte. Sie lassen sich aus Terephthalsäure (oder ihren reaktionsfähigen Derivaten) und den jeweiligen aliphatischen Diolen mit 2 bzw. 4 C-Atomen bzw. dem cycloaliphatischen 1,4-Bis(hydroxymethyl)-cyclohexan nach bekannten Methoden herstellen (Kunststoff-Handbuch, Bd. VIII, S. 695 FF, Karl-Hanser-Verlag, München 1973).

Bevorzugt als Polyester einzusetzendes PET enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Ethylenglykolreste.

Bevorzugt als Polyester einzusetzendes PBT enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, Butandiol-1,4-glykolreste.

Bevorzugt als Polyester einzusetzendes PCT enthält mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, 1,4-Bis(hydroxymethyl)-cyclohexanglykolreste.

Die erfindungsgemäß einzusetzenden Polyester können in bevorzugter Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, bevorzugt Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, oder Cyclohexandicarbonsäure.

Die bevorzugt einzusetzenden und oben genannten Polyester können neben Ethylenresten, Butandiol-1,4-glykolresten bzw. 1,4-Bis(hydroxymethyl)-cyclohexanglykol-resten bis zu 20 Mol-% andere Reste aliphatischer Diole mit 3 bis 12 C-Atomen oder cycloaliphatischer Diole mit 6 bis 21 C-Atomen enthalten. Bevorzugt sind Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3 oder 1,6,2-Ethylhexandiol-1,3, 2,2-Diethylpropandiol-1,3, Hexandiol-2,5, 1,4-Di-(ß-hydroxy-ethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan oder 2,2-Bis-(4-hydroxypropoxy-phenyl)-propan (DE-A 24 07 674 (= US 4 035 958), DE-A 24 07 776, DE-A 27 15 932 (=US 4 176 224)).

In einer Ausführungsfom können die bevorzugt einzusetzenden und oben genannten Polyester durch Einbau relativ kleiner Mengen 3 - oder 4 - wertiger Alkohole oder 3 - oder 4 - basischer Carbonsäuren, wie sie z.B. in der DE-A 19 00 270 (= US-A 3 692 744) beschrieben sind, verzweigt werden. Bevorzugte Verzweigungsmittel sind Trimesinsäure, Trimellitsäure, Trimethylolethan und Trimethylolpropan und Pentaerythrit.

Die erfindungsgemäß einzusetzenden und oben genannten Polyester besitzen bevorzugt eine intrinsische Viskosität im Bereich von ca. 30 cm³/g bis 150 cm³/g, besonders bevorzugt im Bereich von 40 cm³/g bis 130 cm³/g, insbesondere bevorzugt im Bereich von 50 cm³/g bis 100 cm³/g jeweils gemessen in Phenol/o-Dichlorbenzol (1:1 Gew.-Teile) bei 25°C mittels eines Ubbelohde Viskosimeters.

Erfindungsgemäß einzusetzendes PBT kann beispielsweise von der Lanxess Deutschland GmbH, Köln, Deutschland, unter der Bezeichnung Pocan® B1300 erworben werden.

Erfindungsgemäß einzusetzendes PET kann beispielsweise in Form von Polyester Chips PET V004 von der Firma Invista, Wichita, USA bezogen werden.

Erfindungsgemäß einzusetzendes PCT (CAS No. 24936-69-4) kann beispielsweise von SK Chemicals unter dem Handelsnamen Puratan® bezogen werden. Die als Komponente a) einzusetzenden Polyester können gegebenenfalls auch im Gemisch mit anderen Polyestern und/oder weiteren Polymeren eingesetzt werden.

### Komponente b)

Für das erfindungsgemäß einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als Al₂O₃) und einen Sauerstoffüberschuss in der Gasphase bei der Oxidation des Titantetrachlorids zu Titandioxid von mindestens 2 %; beim SP-Grundkörper durch eine Dotierung z. B. mit Al, Sb, Nb oder Zn. Besonders bevorzugt, um eine hinreichend hohe Helligkeit der aus den erfindungsgemäßen Zusammensetzungen herzustellenden Erzeugnisse zu erhalten, ist eine "leichte" Stabilisierung mit Al bevorzugt, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. In organischen Medien haben diese Radikale einen Bindemittelabbau zur Folge. Erfindungsgemäß bevorzugt wird deshalb zur Erniedrigung der Photoaktivität des Titandioxids dieses anorganisch nachbehandelt, besonders bevorzugt mit Oxiden von Si und / oder Al und / oder Zr und / oder durch den Einsatz von Sn-Verbindungen.

Bevorzugt ist die Oberfläche von pigmentärem Titandioxid mit amorphen Ausfällungen von Oxidhydraten der Verbindungen SiO₂ und / oder Al₂O₃ und / oder Zirkonoxid bedeckt. Die Al₂O₃-Hülle erleichtert die Pigmentdispergierung in der Polymermartrix, die SiO₂-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Des Weiteren erfindungsgemäß bevorzugt ist Titandioxid, dessen Oberfläche mit Phosphatverbindungen behandelt wurde.

Erfindungsgemäß bevorzugt einzusetzendes Titandioxid weist eine mittlere Teilchengröße im Bereich von 90nm bis 2000nm, besonders bevorzugt im Bereich von 100nm bis 500nm auf.

Erfindungsgemäß bevorzugt einzusetztendes Titandioxid weist eine Reflexion am Pulver von größer 80%, bevorzugt größer 85%, besonders bevorzugt größer 90%. Zur Bestimmung der Reflexion im Rahmen der vorliegenden Erfindung werden 15 mg Titandioxid ein Deckglas (Firma Menzel-Glaser, 18x18 mm) gegeben. Ein weiteres Deckglas wird aufgelegt und das Titandioxid durch das Auflegen eines Gewichts von 1 kg für 5 min verpresst. Anschließend wird die Reflexion durch das Deckglas vermessen. Als Wert für die Reflexion wird der Glanzwert bei 450 nm gemäß DIN 5033-4 auf einem Farbmessgerät der Firma Minolta (CM2600D) unter Einsatz von D65-Licht gemessen.

Ein kommerziell erhältliches Produkt ist beispielsweise das Kronos 2230 der Fa. Kronos, Dallas, USA.

### Komponente c)

Zudem enthalten die Zusammensetzungen und Formmassen Mg₃Si₄O₁₀(OH)₂, auch als Talkum oder als Talk bezeichnet. Talkum ist ein Schichtsilikat mit der chemischen Zusammensetzung Mg₃Si₄O₁₀(OH)₂, das je nach Modifikation als Talk-1A im triklinen oder als Talk-2M im monoklinen Kristallsystem kristallisiert (http://de.wikipedia.org/wiki/Talkum). In bevorzugter Ausführungsform wird Mg₃Si₄O₁₀(OH)₂ [CAS No. 14807-96-6] in mikrokristalliner Form eingesetzt wobei die mikrokristalline Form durch ein Aspektverhältnis von rund 10 : 1 und weniger charakterisiert ist. Bei einem Aspektverhältnis von teilweise bis zu 35 : 1 spricht man von makrokristallinem Talkum, wobei der Fachmann unter Aspektverhältnis das Verhältnis der Höhe oder Tiefe einer Struktur zu ihrer (kleinsten) Breite versteht. Erfindungsgemäß einzusetzendes Talkum kann beispielsweise als Mistron® R10 von Imerys Talc Group, Toulouse, Frankreich (Rio Tinto Group) bezogen werden.

### Komponente d)

Als Phosphitstabilisator wird bevorzugt wenigstens eine Komponente aus der Gruppe Tris(2,4-ditert-butylphenyl)phosphit (Irgafos® 168, BASF SE, [CAS No. 31570-04-4]), Bis(2,4-di-tert-butylphenyl)pentaerythritol-diphosphit (Ultranox® 626, Chemtura, [CAS No. 26741-53-7]), Bis(2,6-di-ter-butyl-4-methylphenyl)pentaerythritol-diphosphit (ADK Stab PEP-36, Adeka, [CAS No. 80693-00-1]), Bis(2,4-dicumylphenyl)pentaerythritol-diphosphit (Doverphos® S-9228, Dover Chemical Corporation, [CAS No. 154862-43-8]), Tris(nonylphenyl)phosphit (Irgafos® TNPP, BASF SE, [CAS No. 26523-78-4]), (2,4,6-tri-t-butylphenol)2-butyl-2-ethyl-1,3-propanediol-phosphit (Ultranox® 641, Chemtura, [CAS No. 161717-32-4]) und Tetrakis(2,4-di-tert-butylphenyl)-1,1-biphenyl-4,4'-diylbisphos-phonit (Hauptbestandteil des Hostanox® P-EPQ) ausgewählt und eingesetzt.

Insbesondere bevorzugt wird als Phosphitstabilisator wenigstens Hostanox® P-EPQ [CAS No. 119345-01-6] der Clariant International Ltd., Muttenz, Schweiz eingesetzt. Dieses enthält das erfindungsgemäß insbesondere ganz besonders bevorzugt einzusetzende Tetrakis(2,4-di-tert-butylphenyl)-1,1-biphenyl-4,4'-diylbisphosphonit [CAS No. 38613-77-3].

### Komponente e)

Als Entformungsmittel wird bevorzugt wenigstens eines aus der Gruppe Esterwachs(e), Pentaeyitritoltetrastearat (PETS), langkettige Fettsäuren, Salz(e) der langkettigen Fettsäuren, Amidderivat(e) der langkettigen Fettsäuren, Montanwachse sowie niedermolekulare Polyethylen- bzw. Polypropylenwachs(e) oder Ethylen Homopolymer Wachs(e) ausgewählt.

Bevorzugte langkettige Fettsäuren sind Stearinsäure oder Behensäure. Bevorzugte Salze langkettiger Fettsäuren sind Natriumstearat, Calciumstearat oder Zinkstearat. Bevorzugtes Amidderivat langkettiger Fettsäuren ist Ethylen-bis-stearylamid. Bevorzugte Montanwachse sind Ester aus Mischungen geradkettiger, gesättigter Carbonsäuren mit Kettenlängen von 28 bis 32 C-Atomen.

Insbesondere bevorzugt wird als Entformungsmittel wenigstens ein Montanester mehrwertiger Alkohole, besonders bevorzugt wenigstens ein Ester geradgettiger, unverzweigter C₂₈ - C₃₂ Monocarbonsäuren mit Ethylenglykol oder Glycerin eingesetzt, der als Licowax® E von der Firma Clariant, Muttenz, Schweiz, bezogen werden kann.

### Komponente f)

Additive zur Verbesserung der Fließfähigkeit werden auch als Fließhilfsmittel, Fließmittel, Fließhilfe oder inneres Gleitmittel bezeichnet. Derartige Fließhilfsmittel sind aus der Literatur wie z.B. in Kunststoffe 2000, 90 (9), S. 116-118 bekannt und können bevorzugt Fettsäureester von Polyolen oder Amide aus Fettsäuren und Aminen sein. Alternativ zu den oberflächenaktiven Fließhilfsmitteln können interne Fließhilfsmittel eingesetzt werden, die mit den Polymerharzen verträglich sind. Hierfür eignen sich bevorzugt niedermolekulare Verbindungen oder verzweigte, hochverzweigte oder dendritische Polymere mit einer dem Polymerharz ähnlichen Polarität. Derartige hochverzweigte oder dendritische Systeme sind literaturbekannt und können bevorzugt auf verzweigten Polyestern, Polyamiden, Polyesteramiden, Polyethern oder Polyaminen basieren, wie sie in Kunststoffe 2001, 91 (10), S. 179-190, oder in Advances in Polymer Science 1999, 143 (Branched Polymers II), S. 1-34 beschrieben sind. Besonders bevorzugt werden Copolymerisate von α-Olefinen mit Methacrylsäureestern oder Acrylsäureestern aliphatischer Alkohole verwendet. Sie können beispielsweise von Atofina Deutschland, Düsseldorf unter dem Handelsnamen Lotryl® bezogen werden.

Bevorzugt einzusetzende Fließhilfsmittel sind Copolymerisate aus mindestens einem α-Olefin mit mindestens einem Methacrylsäureester oder Acrylsäureester eines aliphatischen Alkohols, vorzugsweise eines aliphatischen Alkohols mit 1-30 Kohlenstoffatomen, wobei der MFI (Melt Flow Index) des Copolymerisats 100 g/10 min, vorzugsweise 150 g/10 min, nicht unterschreitet und der MFI (Melt Flow Index) wurde im Rahmen der vorliegenden Erfindung einheitlich bei 190°C und einem Prüfgewicht von 2,16 kg gemessen bzw. bestimmt wird. In einer bevorzugten Ausführungsform enthält das Copolymerisat keine weiteren reaktiven funktionellen Gruppen.

Bevorzugt geeignete α-Olefine als Bestandteil der als Fließhilfsmittel einzusetzenden Copolymerisate weisen 2 bis 10 Kohlenstoff-Atome auf und können unsubstituiert oder mit einer oder mehreren aliphatischen, cycloaliphatischen oder aromatischen Gruppen substituiert sein. Bevorzugte α-Olefine sind ausgewählt aus der Gruppe umfassend Ethen, Propen, 1-Buten, 1-Penten, 1-Hexen, 1-Octen, 3-Methyl-1-penten. Besonders bevorzugte α-Olefine sind Ethen und Propen, ganz besonders bevorzugt ist Ethen. Ebenfalls geeignet sind Mischungen der beschriebenen α-Olefine.

Der Gehalt des α-Olefins im als Fließhilfsmittel einzusetzenden Copolymerisat liegt bevorzugt im Bereich von 50 bis 90 Gew.-%, besonders bevorzugt im Bereich von 55 bis 75 Gew.-% des gesamten Copolymersats.

Das als Fließhilfsmittel einzusetzende Copolymerisat wird weiterhin definiert durch den zweiten Bestandteil neben dem α-Olefin. Als zweiter Bestandteil sind Alkyl- oder Arylalkylester der Acrylsäure oder Methacrylsäure geeignet, deren Alkyl- oder Arylalkylgruppe aus 1-30 Kohlenstoffatomen gebildet wird und keine oder nur eine geringe Konzentration an reaktiven Funktionen ausgewählt aus der Gruppe umfassend Epoxide, Oxetane, Anhydride, Imide, Aziridine, Furane, Säuren, Amine enthält. Die Alkyl-oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Bevorzugt geeignete Methacrylsäure- oder Acrylsäureester in diesem Zusammenhang sind auch solche, die aus einer Alkoholkomponente synthetisiert wurden, die auf Oligoethylenglycol oder Oligopropylenglycol mit nur einer Hydroxylgruppe und maximal 30 C-Atomen basieren.

Besonders bevorzugt wird die Alkyl- oder Arylalkylgruppe des Methacrylsäure- oder Acrylsäureesters ausgewählt aus der Gruppe umfassend 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Ganz besonders bevorzugt sind Alkyl- oder Arylalkylgruppen mit 6-20 Kohlenstoffatomen. Bevorzugt sind insbesondere auch verzweigte Alkylgruppen, die im Vergleich zu linearen Alkylgruppen gleicher Anzahl an Kohlenstoffatomen zu einer niedrigeren Glasübergangs-Temperatur T_{G} führen.

Erfindungsgemäß insbesondere bevorzugt als Fließmittel einzusetzende Copolymerisate sind solche, bei denen das α-Olefin mit Acrylsäure-(2-ethyl)-hexylester copolymerisiert wird.

Ebenfalls geeignet sind Mischungen der beschriebenen Acrylsäure- oder Methacrylsäurester.

Der Gehalt der Acrylsäure- oder Methacrylsäureester im als Fließmittel einzusetzenden Copolymerisat liegt bevorzugt im Bereich von 10 bis 50 Gew.-%, besonders bevorzugt im Bereich von 25 bis 45 Gew.-% des geamten Copolymerisats.

Als Fließmittel bevorzugt einzusetzende Copolymerisate zeichnen sich neben der Zusammensetzung durch das niedrige Molekulargewicht aus. Dementsprechend sind für die Komponente f) insbesondere Copolymerisate geeignet, die einen MFI-Wert gemessen bei 190°C und einer Belastung von 2,16 kg von mindestens 100 g / 10 min, bevorzugt von mindestens 150 g / 10 min aufweisen.

### Komponente g)

In bevorzugter Ausführungsform wird in den erfindungsgemäßen Zusammensetzungen und den aus diesen herzustellenden Formmassen wenigstens ein Additiv eingesetzt, das sich von den Komponenten b), c), d), e), und f) unterscheidet.

Bevorzugte Additive sind auszuwählen aus der Gruppe der Füll-und Verstärkungsstoffe, Stabilisatoren, UV-Stabilisatoren, Gammastrahlenstabilisatoren, Antistatika, Flammschutzmittel, Elastomermodifikatoren, Brandschutzadditive, Emulgatoren, Nukleierungsmittel, Säurefänger, Weichmacher, Gleitmittel, Farbstoffe oder Pigmente sowie zusätzlicher vom Titandioxid unterschiedlicher Wärmeleitfähigkeitsadditive. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als von Komponente d) in den Formmassen unabhängig einzusetzende Stabilisatoren werden bevorzugt sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

Als Pigmente bzw. Farbstoffe werden neben dem bereits auch als Pigment dienenden Titandioxid bevorzugt Zinksulfid, Bariumsulfat, Ultramarinblau, Eisenoxid, Phthalocyanine, Chinacridone, Perylene, Nigrosin und Anthrachinone eingesetzt.

Als Nukleierungsmittel, zusätzlich zum Talkum, werden bevorzugt Natrium- oder Calciumphenylphosphinat, Aluminiumoxid oder Siliziumdioxid eingesetzt.

Als Säurefänger werden bevorzugt Hydrotalcit, Kreide, Böhmit oder Zinkstannate eingesetzt.

Als Weichmacher werden bevorzugt Phthalsäuredioctylester, Phthalsäuredibenzylester, Phthalsäurebutylbenzylester, Kohlenwasserstofföle oder N-(n-Butyl)benzolsulfonamid eingesetzt.

Bevorzugte Flammschutzmittel sind handelsübliche organische Halogenverbindungen mit Synergisten oder handelsübliche organische Stickstoffverbindungen oder organisch/anorganische Phosphorverbindungen, die einzeln oder im Gemisch miteinander eingesetzt werden. Auch mineralische Flammschutzadditive wie z.B. Magnesiumhydroxid oder Ca-Mg-Carbonat-Hydrate können eingesetzt werden. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether genannt. Als Phosphorverbindungen sind die Phosphorverbindungen gemäß WO-A 98/17720 (= US 6 538 024) geeignet, bevorzugt roter Phosphor, Metallphosphinate, insbesondere Aluminiumphosphinat oder Zinkphosphinat, Metallphosphonate, insbesondere Aluminiumphosphonat, Calciumphosphonat oder Zinkphosphonat, Derivate der 9,10-Dihydro-9-oxa-10-phosphaphenanthren-10-oxide (DOPO-Derivate)], Triphenylphosphat (TPP), Resorcinol-bis-(diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphazenoligomere und deren Mischungen. Als Stickstoffverbindungen kommen insbesondere Melamin oder Melamincyanurat, Reaktionsprodukte aus Trichlortriazin, Piperazin und Morpholin gemäß CAS-Nr. 1078142-02-5 (z.B. MCA PPM Triazin HF der Fa. MCA Technologies GmbH, Biel-Benken, Schweiz) in Frage. Als Synergisten sind bevorzugt Antimonverbindungen, insbesondere Antimontrioxid oder Antimonpentoxid, Zinkverbindungen, Zinnverbindungen, insbesondere Zinkstannat oder Borate, insbesondere Zinkborate geeignet.

Auch können dem Flammschutzmittel sogenannte Kohlenstoffbildner und Tetrafluor-ethylenpolymerisate zugesetzt werden.

Unter den halogenhaltigen Flammschutzmitteln werden besonders bevorzugt Ethylen-1,2-bistetrabromphthalimid, Tetrabrombisphenol-A-epoxyoligomer, Tetrabrombisphenol-A-oligocarbonat, Polypentabrombenzylacrylat und/oder bromiertes Polystyrol mit Antimontrioxid und/oder Zinkstannaten als Synergisten eingesetzt. Unter den halogenfreien Flammschutzmitteln werden besonders bevorzugt Aluminium-tris(diethylphosphinat) (z.B. Exolit® OP1240 der Clariant International Ltd. Muttenz, Schweiz, CAS Nr. 225789-38-8) alleine oder in Kombination mit Melaminpolyphosphat (z.B. Melapur® 200/70 der BASF SE, Ludwigshafen, Deutschland) und/oder in Kombination mit Melamincyanurat (z.B. Melapur® MC25 der BASF SE, Ludwigshafen, Deutschland) eingesetzt, wobei das alleinige Einsetzen von Aluminium-tris(diethylphosphinat) ganz besonders bevorzugt ist.

Als Elastomermodifikator einzusetzendes Additiv wird bevorzugt eines oder mehrere Pfropfpolymerisat(e) E von
- E.1: 5 bis 95 Gew.-%, vorzugsweise 30 bis 90 Gew.-%, wenigstens eines Vinylmonomeren auf
- E.2: 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C eingesetzt.

Die Pfropfgrundlage E.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere E.1 sind vorzugsweise Gemische aus
- E.1.1: 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat)
und
- E.1.2: 1 bis 50 Gew.-% Vinylcyanide (ungesättigte Nitrile wie Acrylnitril und Metha-crylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E.1.2 Acrylnitril.

Für die in den Elastomermodifikatoren einzusetztenden Pfropfpolymerisate geeignete Pfropfgrundlagen E.2 sind bevorzugt Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist als Pfropfgrundlage E.2. reiner Polybutadienkautschuk.

Besonders bevorzugte Polymerisate E sind ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen). ABS bedeutet Acrylnitril-Butadien-Styrol-Copolymerisat [CAS No. 9003-56-9], und steht als Abkürzung für ein synthetisches Terpolymer aus den drei unterschiedlichen Monomerarten Acrylnitril, 1,3-Butadien und Styrol. Es gehört zu den amorphen Thermoplasten. Die Mengenverhältnisse können dabei variieren von 15-35 % Acrylnitril, 5-30 % Butadien und 40-60 % Styrol.

Die Elastomermodifikatoren bzw. Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Propfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren sind. Zu den bevorzugten polymerisierbaren Acrylsäureestern gehören C₁-C₈-Alkylester, bevorzugt Methyl-, Ethyl-, Butyl-, n-Octyl- und 2-Ethylhexylester; Halogenalkylester, vorzugsweise Halogen-C₁-C₈-alkyl-ester, insbesondere bevorzugt Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.
Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind beispielsweise Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropfgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Unabhängig von den oben genannten Komponenten können als Additive die erfindungsgemäßen Formmassen bzw. die erfindungsgemäßen Zusammensetzungen zusätzliche Füll- und/oder Verstärkungsstoffe enthalten.

Bevorzugt wird aber auch eine Mischung aus zwei oder mehreren unterschiedlichen Füllstoffen und/oder Verstärkungsstoffen, insbesondere auf Basis von Talk, Glimmer, Silikat, Quarz, Wollastonit, Kaolin, amorphe Kieselsäuren, Magnesiumcarbonat, Kreide, Feldspat, Bariumsulfat, Glasfasern, Glaskugeln, Hohlglaskugeln und/oder faserförmige Füllstoffe und/oder Verstärkungsstoffen auf der Basis von Kohlenstofffasern eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide, Feldspat oder Bariumsulfat eingesetzt. Besonders bevorzugt werden erfindungsgemäß mineralische teilchenförmige Füllstoffe auf der Basis von Wollastonit oder Kaolin eingesetzt.

Besonders bevorzugt werden ferner auch nadelförmige mineralische Füllstoffe als Additiv eingesetzt. Unter nadelförmigen mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm bestimmt mit einem CILAS GRANULOMETER.

In bevorzugter Ausführungsform wird wenigstens ein oberflächenmodifizierter Füll- oder Verstärkungsstoff eingesetzt, besonders bevorzugt wenigstens ein mit einem Haftvermittler bzw. Haftvermittlersystem, insbesondere bevorzugt auf Epoxidbasis, versehener Füll- oder Verstärkungsstoff. Die Vorbehandlung ist jedoch nicht unbedingt erforderlich.

In einer besonders bevorzugten Ausführungsform werden als Additiv Glasfasern eingesetzt. Bevorzugte Glasfasern haben einen Faserdurchmesser im Bereich von 7 und 18 µm, besonders bevorzugt im Bereich von 9 und 15 µm, und werden als Endlosfasern, Langfasern, als geschnittene oder als gemahlene Glasfasern zugesetzt.

Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer lange im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Bauteile mit Endlosfasern erzielen die höchsten Steifigkeits- und Festigkeitswerte. Im Glasmehl liegt die Faserlänge im Bereich von 70 bis 200 µ.

Die Fasern werden bevorzugt mit einem geeigneten Schlichtesystem und einem Haftvermittler bzw. Haftvermittlersystem, besonders bevorzugt auf Silanbasis, ausgerüstet. Ganz besonders bevorzugte Haftvermittler auf Silanbasis für die Vorbehandlung sind Silanverbindungen der allgemeinen Formel (I)

(X-(CH₂)_{q})k-Si-(O-CrH₂r+1)₄-k (I)

in der die Substituenten folgende Bedeutung haben:
X: NH₂-, HO-, 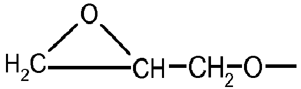
q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Insbesondere bevorzugte Haftvermittler sind Silanverbindungen aus der Gruppe Amino-propyltrimethoxysilan, Aminobutyltrimethoxysilan, Aminopropyltriethoxysilan, Aminobutyltriethoxysilan sowie die entsprechenden Silane, welche als Substituent X in Formel (I) eine Glycidylgruppe enthalten.

Für die Ausrüstung der Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf die Glasfasern zur Oberflächenbeschichtung eingesetzt.

Die teilchenförmigen Füllstoffe, insbesondere Glasfasern, können bedingt durch die Verarbeitung zur thermoplastischen Formmasse bzw. zum Erzeugnis einen kleineren d97-bzw. d50-Wert aufweisen, als die ursprünglich eingesetzten Füllstoffe.

Als zusätzliche vom Titandioxid unterschiedliche Wärmeleitfähigkeitsadditive werden bevorzugt Bornitrid oder Aluminiumnitrid eingesetzt. Bevorzugt beträgt das Verhältnis der Boratome zu den Stickstoffatomen im Bornitrid bzw. das Verhältnis der Aluminiumatome zu den Stickstoffatomen im Aluminiumnitrid größer 1. Besonders bevorzugt liegt das Verhältnis der Boratome zu den Stickstoffatomen im Bornitrid im Bereich von 1,05-1,2. Besonders bevorzugt liegt das Verhältnis der Aluminiumatome zu den Stickstoffatomen im Aluminiumnitrid im Bereich von 1,05-1,25. Besonders bevorzugt liegt die Korngröße des Bornitrids und Aluminiumnitrids im Bereich von 1 µm bis 600 µm.

### Verfahren

Auf den erfindungsgemäßen Zusammensetzungen basierende Formmassen erhält man durch Mischen der jeweiligen Komponenten in den angegebenen Mengen. Bevorzugt erfolgt das Mischen in wenigstens einem Mischaggregat, besonders bevorzugt in wenigstens einem Extruder.
Die vorliegende Erfindung betrifft deshalb auch ein Verfahren zur Herstellung von Formmassen, dadurch gekennzeichnet, dass man die jeweiligen oben angegebenen Komponenten in den oben angegebenen Mengen in wenigstens einem Mischaggregat, bevorzugt in wenigstens einem Extruder mischt. Das Mischen erfolgt bevorzugt bei Temperaturen im Bereich von 260 bis 295°C und bevorzugt bei Drücken im Bereich von 8 bis 14 bar in der Schmelze. Danach wird die Mischung durch wenigstens einen Mischaggregatauslass, bevorzugt einen Extruderauslass, als Strang ausgetragen, bis zur Granulierfähigkeit abgekühlt und granuliert. Bevorzugt werden die Granulate in einem weiteren Trocknungsschritt getrocknet. Bevorzugt erfolgt die Trocknung unter Vakuum. Besonders bevorzugt erfolgt die Trocknung zusätzlich zum Vakuum bei Temperaturen von bis zu 120°C. Erfindungsgemäße Zusammensetzungen im Sinne der vorliegenden Erfindungen sind Mischungen der erfindungsgemäß einzusetzenden Komponenten, daraus herzustellende Zwischenprodukte in Form von Formmassen oder Granulaten sowie aus diesen Zwischenprodukten herzustellende Erzeugnisse. Hierzu werden die aus den erfindungsgemäßen Zusammensetzungen erhältlichen Formmassen oder Granulate einem Spritzguss, einer Extrusion oder einer Profil-Extrusion unterzogen werden.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet die Arbeitsschritte:
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Erfindungsgemäß wird die Wärmeleitfähigkeit orthogonal zu der im Spritzguss angewandten Spritzrichtung erhöht.

Im Gegensatz zum Spritzguss wird bei der Extrusion ein endlos geformter Kunststoffstrang, hier eine Polyesterzusammensetzung, im Extruder eingesetzt, wobei der Extruder eine Maschine zur Herstellung thermoplastischer Formstücke ist. Man unterscheidet:
- Einschneckenextruder und Doppelschneckenextruder sowie die jeweiligen Untergruppen
- konventioneller Einschneckenextruder, förderwirksamer Einschneckenextruder,
- gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere wärmeleitfähige Erzeugnisse, erhältlich durch Extrusion, Profil-Extrusion oder Spritzguss der erfindungsgemäßen Formmassen.
Die vorliegende Erfindung betrifft aber auch ein Verfahren zur Herstellung wärmeleitfähiger Erzeugnisse, dadurch gekennzeichnet, dass Polyester basierte Formmassen, die wenigstens 55 bis 80 Gew.-% Titandioxid bezogen auf 100 Gew.-% Formmasse in Kombination mit Mg₃Si₄O₁₀(OH)₂ enthalten, im Spritzguss oder mittels Extrusion verarbeitet werden.

Infolge der bei hohen Titandioxid Konzentrationen auftretenden Verbesserung der Wärmeleitfähigkeit Polyester basierter Erzeugnisse eignen sich diese hervorragend zur Herstellung elektrisch isolierender, thermisch leitfähiger Erzeugnisse bevorzugt von Elektro- und Elektronikeinhausungen und Kühlkörpern, insbesondere bevorzugt von Kühlkörpern und wärmeableitenden Komponenten von LEDs.

### Beispiele:

### Edukte:

PBT: Polybutylenterephthalat Pocan® B1300 der Lanxess Deutschland GmbH, Köln, Deutschland

Phosphitstabilisator: Hostanox® P-EPQ [CAS No. 119345-01-6] der Clariant International Ltd., Muttenz, Schweiz eingesetzt, enthaltend das Tetrakis(2,4-di-tert-butylphenyl)-1,1-biphenyl-4,4'-diylbisphosphonit

Talkum: Mistron® R10 von Imerys Talc Group, Toulouse, Frankreich (Rio Tinto Group)

Entformungsmittel: Licowax® E [CAS No. 73138-45-1] der Clariant International Ltd., Muttenz, Schweiz

Aluminiumsilikat: Al₂O₃SiO₂-Partikel Silatherm® T1360-EST, Quarzwerke GmbH, Frechen, Deutschland.

Aluminiumoxid: Martoxid® MDS der Albermale Corp. Baton Rouge, Louisiana, USA

### Versuchsdurchführung:

Zur Herstellung der erfindungemäß beschriebenen Zusammensetzungen wurden die einzelnen Komponenten in einem Zweiwellenextruder (ZSK 26 Mega Compounder der Fa. Coperion Werner & Pfleiderer (Stuttgart, Deutschland mit 3-Loch Düsenplatte und einem Düsenlochdurchmesser von 3mm) bei Temperaturen zwischen 270 und 295°C in der Schmelze vermischt, als Strang ausgetragen, bis zur Granulierfähigkeit abgekühlt und granuliert. Vor weiteren Schritten wurde das Granulat bei 120°C im Vakuumtrockenschrank für ca. 2h getrocknet.

Die Platten und Prüfkörper für die in der Tabelle 1 und Tabelle 2 aufgeführten Untersuchungen wurden auf einer handelsüblichen Spritzgießmaschine bei einer Massetemperatur im Bereich von 280 bis 290°C und einer Werkzeugtemperatur im Bereich von 80 bis 120°C verspritzt.

### Messung der Schlagzähigkeit:

Die Schlagzähigkeit (Einheit kJ/m²) der aus den erfindungsgemäßen thermoplastischen Formmassen hergestellten Erzeugnisse wurden im Schlagversuch nach ISO 180-1 U bei 23°C bestimmt.

### Messung der Randfaserdehnung:

Die Randfaserdehnung (Einheit %) der aus den erfindungsgemäßen thermoplastischen Formmassen hergestellten Erzeugnisse wurden im Biegeversuch nach ISO5 178-A bei 23°C bestimmt.

### Messung der Wärmeleitfähigkeit:

Die Wärmeleitfähigkeit (Einheit W/mK) wurde an Platten mit den Maßen 12,7 mm · 12,7 mm · 2 mm nach ISO 22007-4 bestimmt.

### Messung der Reflexion:

Als Wert für die Reflexion wurde der Glanzwert bei 450nm unter D65-Licht auf einem Gerät der Firma Minolta (CM2600D) gemäß DIN 5033-4 an Prüfkörpern der Dimensionen 60mm x 40mm x 4 mm gemessen.

**Tabelle 1**

| | Vgl 1 | Vgl 2 | Bsp 1 |
|---|---|---|---|
| PBT | 34,5 | 34,5 | 34,5 |
| Aluminiumsilikat | 65 | | |
| Aluminiumoxid | | 65 | |
| Titandioxid | | | 65 |
| Entformungsmittel | 0,3 | 0,3 | 0,3 |
| Phosphitstabilisator | 0,1 | 0,1 | 0,1 |
| Talkum | 0,1 | 0,1 | 0,1 |
| | | | |
| | | | |
| Schlagzähigkeit [KJ/m2] | 18 | 10 | 35 |
| Randfaserdehnung [%] | 1,6 | 1,1 | 2,4 |
| Wärmeleitfähigkeit [W/mK] | --- | 0,7 | 0,9 |
| Reflexion 450nm | 20 | --- | 95 |

Aus Tabelle 1 (Bsp 1 = erfindungsgemäßes Beispiel; Vgl 1 und 2 = Vergleichsbeispiele gemäß dem Stand der Technik) ist ersichtlich, dass Erzeugnisse auf Basis erfindungsgemäßer Zusammensetzungen bei gleichem Füllgrad deutlich bessere mechanische Eigenschaften haben. Die Wärmeleitfähigkeit des Bsp.1 ist deutlich höher als mit Aluminiumoxid als Wärmeleitfähigkeitsadditiv (Vergleichsbeispiel 2). Die bei 450nm gemessene Reflexion des Vergleichsbeispiels 1 war deutlich geringer, als beim Beispiel 1 mit einem Titandioxid Gehalt von wenigstens 50 Gew.-% - hier 65 Gew.-% - bezogen auf 100 Gew.-% einzusetzender Formmasse.

## Patentansprüche

1. Zusammensetzungen enthaltend
a) 20 bis 50 Gew.-% wenigstens eines Polyesters und
b) 50 bis 80 Gew.% Titandioxid,
wobei die Summe aller Gewichtsprozente stets 100 ergibt.

2. Zusammensetzungen gemäß Anspruch 1, **dadurch gekennzeichnet, dass** als Polyester wenigstens ein Polyalkylenterephthalat, bevorzugt wenigstens ein Polyester aus der Gruppe PET (Polyethylenterephthalat), PBT (Polybutylenterephthalat) und PCT (Poly(1,4-cyclohexandimethanolterephthalat) oder deren Blends eingesetzt wird.

3. Zusammensetzungen gemäß Anspruch 2, **dadurch gekennzeichnet, dass** im Falle von Blends aus PET und PBT der PET Anteil bezogen auf die Summe aller enthaltenen Polyester im Bereich von 50 bis 99,9 Gew-% liegt.

4. Zusammensetzungen gemäß einem der Ansprüche 1 bis 3, **dadurch gekennzeichnet, dass** diese zusätzlich c) 0.01 bis 15 Gew.-% Mg₃Si₄O₁₀(OH)₂, bevorzugt mikrokristallines Mg₃Si₄O₁₀(OH)₂, enthalten, wobei die Summe aller Gewichtsprozente stets 100 ergibt.

5. Zusammensetzungen gemäß Anspruch 3, **dadurch gekennzeichnet, dass** diese zusätzlich d) 0,01 bis 5 Gew.-% wenigstens eines Phosphitstabilisators enthalten, wobei die Komponenten a), b), c) soweit reduziert werden, dass die Summe aller Gewichtsprozente stets 100 ergibt.

6. Zusammensetzungen gemäß Anspruch 5, **dadurch gekennzeichnet, dass** der Phosphitstabilisator aus der Gruppe Tris(2,4-ditert-butylphenyl)phosphit, Bis(2,4-di-tert-butylphenyl)pentaerythritol-diphosphit, Bis(2,6-di-ter-butyl-4-methylphen-yl)pentaerythritol-diphosphit, Bis(2,4-dicumylphenyl)pentaerythritol-diphosphit, Tris(nonylphenyl)phosphit, (2,4,6-tri-t-butylphenol)2-butyl-2-ethyl-1,3-propanediol-phosphit und Tetrakis(2,4-di-tert-butylphenyl)-1,1-biphenyl-4,4'-diylbisphosphonit ausgewählt wird, bevorzugt Tetrakis(2,4-di-tert-butylphenyl)-1,1-biphenyl-4,4'-diylbisphosphonit.

7. Verfahren zur Herstellung einer Zusammensetzung gemäß einem der Ansprüche 1 bis 6, **dadurch gekennzeichnet, dass** die Komponenten a) und b) sowie gegebenenfalls c) und/oder d) in den angegebenen Gewichtsprozenten miteinander gemischt werden.

8. Verfahren gemäß Anspruch 7, **dadurch gekennzeichnet, dass** das Mischen in wenigstens einem Mischaggregat, bevorzugt in wenigstens einem Extruder erfolgt.

9. Verfahren gemäß der Ansprüche 7 oder 8, **dadurch gekennzeichnet, dass** das Mischen bei Temperaturen im Bereich von 260 bis 295°C und bevorzugt bei Drücken im Bereich von 8 bis 14 bar in der Schmelze erfolgt.

10. Verfahren gemäß Anspruch 9, **dadurch gekennzeichnet, dass** das Mischen in wenigstens einem Mischaggregat erfolgt und die Mischung durch wenigstens einen Mischaggregatauslass als Strang ausgetragen, bis zur Granulierfähigkeit abgekühlt und granuliert wird.

11. Verfahren gemäß Anspruch 10, **dadurch gekennzeichnet, dass** das Granulat getrocknet wird.

12. Formmassen erhältlich nach einem der Ansprüche 7 bis 9.

13. Granulate erhältlich nach Anspruch 10.

14. Erzeugnisse, insbesondere Halbzeuge oder Formteile, erhältlich durch Extrusion, Profil-Extrusion oder Spritzguss der Formmassen gemäß Anspruch 12 oder der Granulate gemäß Anspruch 13.

15. Verwendung von Zusammensetzungen gemäß einem der Ansprüche 1 bis 7 zur Herstellung wärmeleitfähiger Erzeugnisse.

16. Verwendung gemäß Anspruch 15, **dadurch gekennzeichnet, dass** die Zusammensetzungen einer Extrusion, Profil-Extrusion oder einem Spritzguss unterzogen werden.

17. Verwendung gemäß Anspruch 16, **dadurch gekennzeichnet, dass** die Wärmeleitfähigkeit orthogonal zu der im Spritzguss angewandten Spritzrichtung erhöht wird.
